# EUROPEAN PATENT APPLICATION

(11) **EP 4 411 214 A1**
(43) Date of publication of application: **07.08.2024**
(21) Application number: 23208495.4
(22) Date of filing: 08.11.2023
(51) Int. Cl.: F21V 8/00, G02B 6/124, G02B 27/09, G02B 6/12

(54) **MICROLENS DEVICES TO CONTROL FAR-FIELD EMISSION OF A DIVERGING PLANAR BEAM**

(30) Priority: 31.01.2023 US 202318162558
(71) Applicant: Honeywell International Inc., Charlotte, NC 28202 (US)
(72) Inventor: PUCKETT, Matthew Wade, Charlotte, 28202 (US); FERTIG, Chad, Charlotte, 28202 (US); HOYT, Chad, Charlotte, 28202 (US); NELSON, Karl D., Charlotte, 28202 (US); HORSTMAN, Luke, Charlotte, 28202 (US)
(74) Representative: Haseltine Lake Kempner LLP

(57) **Abstract**

An optical device comprises a substrate layer having an upper surface, and a waveguide layer over the upper surface of the substrate layer. The waveguide layer comprises an input waveguide defined by a first waveguide portion having a first refractive index; an input slab defined by the first waveguide portion, the input slab adjoined with the input waveguide; and a microlens array defined by a second waveguide portion having a second refractive index that is different from the first refractive index. The microlens array is in optical communication with the input waveguide through the input slab. The microlens array is configured to receive a diverging planar light beam from the input slab along a direction of propagation. The microlens array is configured to control a far-field emission of the light beam such that an emission profile of the light beam exhibits a substantially uniform intensity.

## Description

This invention was made with Government support under N00014-22-C-1043 awarded by Navy. The Government has certain rights in the invention.

### BACKGROUND

In producing an atomic clock, one important functionality is the production of intersecting free-space beams that trap a cloud of atoms. To trap the largest number of atoms and stabilize the frequency reference they provide, it is necessary that the beam have as uniform an intensity as possible. In prior approaches, these uniform beams are produced by sampling the centermost portion of a diverging Gaussian beam with an aperture, but this results in significant power loss, increasing the power budget and reducing the overall power efficiency of the device.

Thus, there is a need for optical devices that allow a beam to emit a more uniform profile and that do not require an aperture.

### SUMMARY

An optical device comprises a substrate layer having an upper surface, and a waveguide layer over the upper surface of the substrate layer. The waveguide layer comprises an input waveguide defined by a first waveguide portion having a first refractive index; an input slab defined by the first waveguide portion, the input slab adjoined with the input waveguide; and a microlens array defined by a second waveguide portion having a second refractive index that is different from the first refractive index. The microlens array is in optical communication with the input waveguide through the input slab. The microlens array is configured to receive a diverging planar light beam from the input slab along a direction of propagation. The microlens array is configured to control a far-field emission of the light beam such that an emission profile of the light beam exhibits a substantially uniform intensity.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a schematic top plan view of a planar microlens device, according to one embodiment;
Figure 2 is a schematic orthogonal view of a microlens device, according to another embodiment; and
Figure 3 is a graph of an intensity profile of light using a planar microlens device, compared with an intensity profile of light without using a planar microlens device.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

Optical devices that include an array of substantially planar microlenses are described herein. These optical devices are configured so as to control a far-field emission of a diverging planar light beam. The array of substantially planar microlenses transform a Gaussian emission profile of a waveguide incident upon a slab into one exhibiting a more uniform intensity.

An optical device including any array of microlenses can be produced by fabricating an integrated photonics waveguide through one of many well-established processes. In these fabrication processes, photonic integrated circuits can be fabricated with a wafer-scale technology involving lithography, on substrates (e.g., chips) of silicon, silica, or a nonlinear crystal material such as lithium niobate. In the definition of the device layer, a waveguide is directed into a planar slab and allowed to diverge. After some distance of propagation, an array of microlenses can be defined in a first device layer, or in a second, separate device layer. These microlenses modify the divergence of the beam propagating through the slab such that the intensity is more uniform than that of a standard Gaussian beam.

In some embodiments, a larger microlens can be used to collimate the diverging light from the array of microlenses. This larger microlens may similarly be defined in either the first device layer or the second device layer. In addition, a planar grating can be defined in either the first device layer or the second device layer, allowing the collimated light from the larger microlens to diffract into free-space. This produces a beam suitable for atom trapping.

In one embodiment, a pair of planar microlenses are angled off-axis relative to a direction of propagation of a beam, producing two peaks in the far-field emission profile of the beam, and where the evanescently decaying tails of the beam overlap, a third peak is produced. The resultant far-field emission profile is more suitable for the trapping of atoms when subsequently diffracted into free space.

Further details regarding the present microlens devices are described as follows and with reference to the drawings.

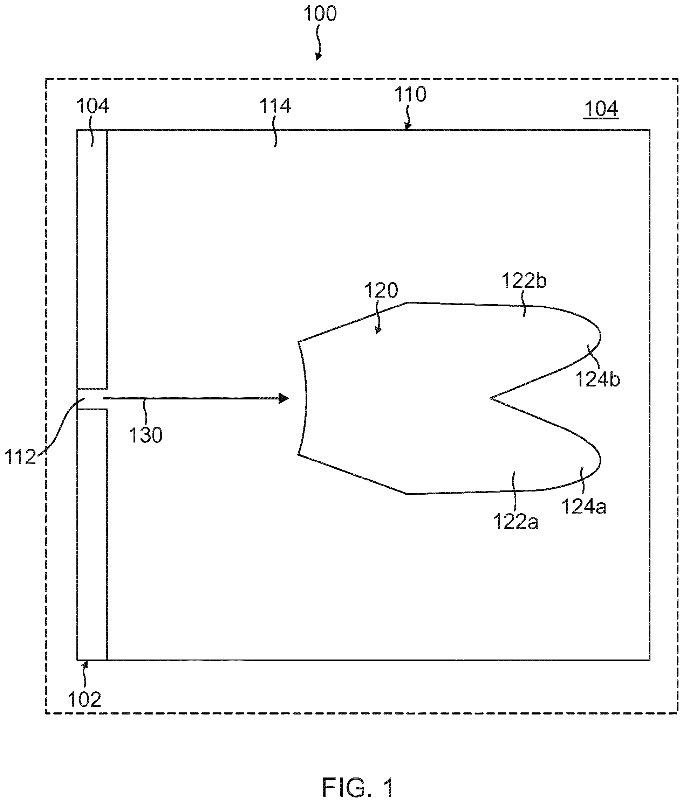

Figure 1 illustrates a planar microlens device 100, according to one embodiment. The microlens device 100 includes a substrate layer 102 having an upper surface 104, and a waveguide layer 110 over upper surface 104. The waveguide layer 110 includes an input waveguide 112 defined by a first waveguide portion having a first refractive index. The waveguide layer 110 also includes an input slab 114 defined by the first waveguide portion, with input slab 114 adjoining input waveguide 112. The input slab 114 adjoins with input waveguide 112, such that input slab 114 is in optical communication with input waveguide 112. The waveguide layer 110 is substantially planar such that input waveguide 112 and input slab 114 are substantially planar with respect to each other.

The waveguide layer 110 also includes a microlens array 120 defined by a second waveguide portion, which has a second refractive index that is different from the first refractive index of the first waveguide portion. Thus, input waveguide 112 and input slab 114 have the first refractive index, and microlens array 120 has the second refractive index. The microlens array 120 is in optical communication with input waveguide 112 through input slab 114.

As shown in the embodiment of Figure 1, microlens array 120 includes a pair of microlenses 122a, 122b, which are respectively angled off-axis relative to a direction of propagation for a diverging planar light beam 130 that enters input slab 114 from input waveguide 112. For example, microlens 122a can be angled at about 15 degrees away (to the right) from the direction of propagation, and microlens 122b can be angled at about 15 degrees away (to the left) from the direction of propagation. In addition, microlenses 122a, 122b have respective convex shaped distal ends 124a, 124b along the direction of propagation. In this embodiment, the refractive index of microlens array 120 is greater than the refractive index of input slab 114 and input waveguide 112.

In an alternative embodiment, the microlenses can have respective concave shaped distal ends along the direction of propagation. In such an alternative embodiment, the refractive index of the input waveguide and slab would be greater than the refractive index of the microlenses.

In addition, while two microlenses 122a, 122b are depicted for microlens array 120, it should be understood that in other embodiments, one or more additional microlenses can be implemented in the microlens array, having similar shapes as microlenses 122a, 122b. Alternatively, the microlens array can have differently shaped microlenses depending on the desired performance characteristics of the device.

The waveguide layer 110 can be composed of various materials, such as silicon nitride (Si₃N₄), silicon (Si), titanium dioxide (TiO₂), gallium arsenide (GaAs), gallium nitride (GaN), combinations thereof, or the like.

The microlens array 120 is configured to control a far-field emission of a diverging planar light beam 130. The microlenses 122a, 122b are configured to transform a Gaussian emission profile of beam 130 from waveguide 112 incident upon input slab 114, such that the emission profile exhibits a substantially uniform intensity.

The microlens device 100 can be produced by fabricating a photonics waveguide such as by using one of several well-established integrated photonics fabrication processes known to those skilled in the art. In fabricating microlens device 100, substrate 102 is provided, such as an initial wafer, which can also include an underlying handle wafer such as a silicon handle. As shown in Figure 1, substrate 102 can be coupled to a photonics chip 104, such as a silicon photonics chip. A waveguide material, such as silicon nitride, silicon, titanium dioxide, gallium arsenide, gallium nitride, combinations thereof, or the like, is deposited on substrate layer 102 to form waveguide layer 110, such as by a conventional deposition process. The input waveguide 112 and input slab 114 are then formed in the first waveguide portion of waveguide layer 110, and microlens array 120 is formed in the second waveguide portion of waveguide layer 110. The input waveguide 112, input slab 146, and microlens array 120 can be formed in using standard microfabrication techniques, such as lithography, etching, and resist removal processes. For example, the structure of microlens array 120 can be realized by etching partially through waveguide layer 110, leaving the microlens structures elevated above the rest of waveguide layer 110. This results in a higher refractive index for the microlens structures, which are formed with a thicker waveguide material.

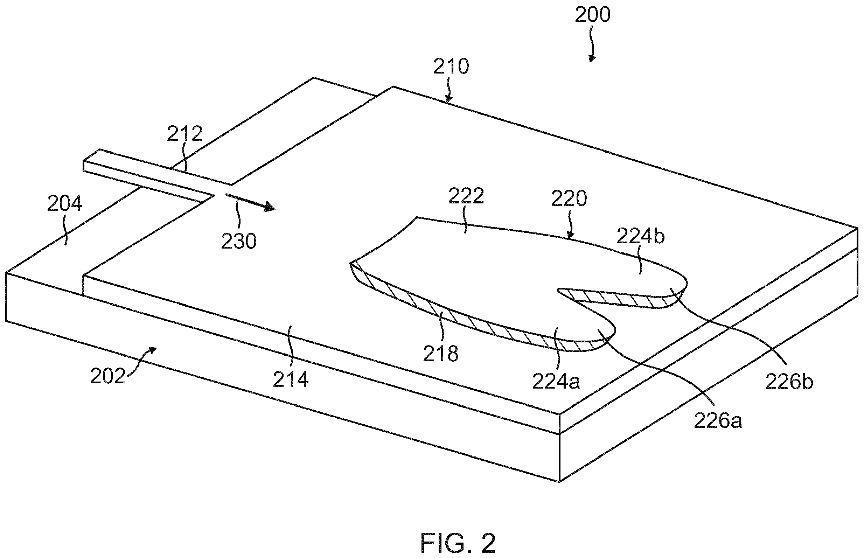

Figure 2 illustrates a microlens device 200, according to another embodiment. The microlens device 200 includes a substrate layer 202 having an upper surface 204, and a first waveguide layer 210 over upper surface 204. The first waveguide layer 210 includes an input waveguide 212 and an input slab 214 that adjoins with input waveguide 212, such that input slab 214 is in optical communication with input waveguide 212. The waveguide layer 210 is substantially planar such that input waveguide 212 and input slab 214 are substantially planar with respect to each other.

A cladding layer 218 is formed over a portion of input slab 214, and a second waveguide layer 220 is formed over cladding layer 218. The second waveguide layer comprises a microlens array 222 in optical communication with input waveguide 212 through input slab 214.

The first waveguide layer 210 is formed of a first material having a first refractive index, and the second waveguide layer 220 is formed of a second material having a second refractive index that is different from the first refractive index. Thus, input waveguide 212 and input slab 214 have the first refractive index, and microlens array 220 has the second refractive index.

In some embodiments, first waveguide layer 210 and second waveguide layer 220 are composed of different materials having different refractive indices. Examples of such materials include silicon nitride, silicon, titanium dioxide, gallium arsenide, gallium nitride, combinations thereof, or the like. Alternatively, first waveguide layer 210 and second waveguide layer 220 can be composed of the same material, but formed so as to exhibit different refractive indices.

As shown in the embodiment of Figure 2, microlens array 222 includes a pair of microlenses 224a, 224b, which are respectively angled off-axis relative to a direction of propagation of a diverging planar light beam 230 entering input slab 214. In addition, microlenses 224a, 224b have respective convex shaped distal ends 226a, 226b along the direction of propagation. In this embodiment, the first refractive index of first waveguide layer 210 is less than the second refractive index of second waveguide layer 220.

In an alternative embodiment, the microlenses can have respective concave shaped distal ends along the direction of propagation. In such an alternative embodiment, the first refractive index of the first waveguide layer, including the input waveguide and slab, would be greater than the second refractive index of the second waveguide layer that includes the microlenses.

In addition, while two microlenses 224a, 224b are depicted for microlens array 222, it should be understood that in other embodiments, one or more additional microlenses can be implemented in the microlens array, having similar shapes as microlenses 224a, 224b. Alternatively, the microlens array can have differently shaped microlenses depending on the desired performance characteristics of the device.

The microlens array 222 is configured to receive diverging planar light beam 230 from input slab 214 along the direction of propagation, such that microlens array 222 controls a far-field emission of light beam 230, resulting in an emission profile of light beam 230 that exhibits a substantially uniform intensity.

The microlens device 200 can be produced by fabricating a photonics waveguide such as by using one of several well-established integrated photonics fabrication processes known to those skilled in the art. In fabricating microlens device 200, substrate 202 is provided, such as an initial wafer, which can also include an underlying handle wafer such as a silicon handle. The substrate 202 can be coupled to a photonics chip. A first waveguide material is deposited on substrate layer 202 to form first waveguide layer 210, such as by a conventional deposition process. The input waveguide 212 and input slab 214 are then formed in first waveguide layer 210, such as through standard lithography, etching, and resist removal steps. Next, an intermediate layer of cladding material is deposited on first waveguide layer 210. A second waveguide material is then deposited on the intermediate layer of cladding material to form second waveguide layer 220. The microlens array 222 is then formed in second waveguide layer 220 such as by additional lithography, etching, and resist removal steps. This leaves cladding layer 218 between input slab 214 and microlens array 222.

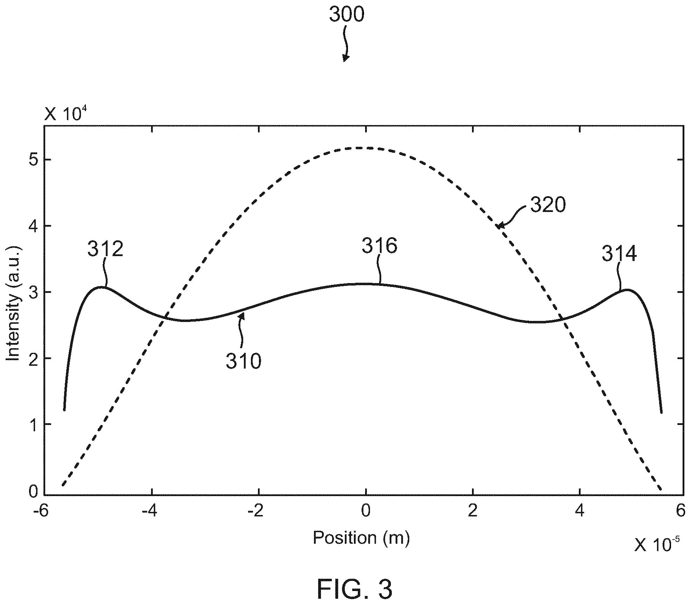

Figure 3 is a graph 300 of an intensity profile of a transmitted light beam using a planar microlens device as described herein, compared with an intensity profile of a transmitted light beam without using the planar microlens device. The graph 300 shows intensity levels with respect to position. A plot line 310 represents an intensity profile using the microlens device, and a plot line 320 represents an intensity profile without using the microlens device.

As shown in Figure 3, the microlenses modify the divergence of a beam propagating through a slab such that the intensity is more uniform, represented by plot line 310, compared to the Gaussian beam without the microlenses, as represented by plot line 320. As indicated by plot line 310, power is pulled out of a central position and distributed more uniformly by using the microlenses. This improves the stability of trapped atom energy levels, for example.

The plot line 310 shows a pair of end peaks 312, 314 in the far-field profile of the beam, and where the evanescently decaying tails of the beam overlap, a central peak 316 is produced. The resultant far-field profile of the beam more closely resembles a rectangular function with a flatter top, and is thus more suitable for the trapping of atoms when subsequently diffracted into free space.

### Example Embodiments

Example 1 includes an optical device, comprising: a substrate layer having an upper surface; and a waveguide layer over the upper surface of the substrate layer, the waveguide layer comprising: an input waveguide defined by a first waveguide portion having a first refractive index; an input slab defined by the first waveguide portion, the input slab adjoined with the input waveguide; and a microlens array defined by a second waveguide portion having a second refractive index that is different from the first refractive index, the microlens array in optical communication with the input waveguide through the input slab; wherein the microlens array is configured to receive a diverging planar light beam from the input slab along a direction of propagation, the microlens array configured to control a far-field emission of the light beam such that an emission profile of the light beam exhibits a substantially uniform intensity.

Example 2 includes the optical device of Example 1, wherein the microlens array includes two or more microlenses, which are respectively angled off-axis relative to the direction of propagation.

Example 3 includes the optical device of any of Examples 1-2, wherein the first waveguide portion and the second waveguide portion are composed of the same material.

Example 4 includes the optical device of any of Examples 2-3, wherein the microlenses have respective convex shaped distal ends along the direction of propagation.

Example 5 includes the optical device of Example 4, wherein the first refractive index of the first waveguide portion is less than the second refractive index of the second waveguide portion.

Example 6 includes the optical device of any of Examples 1-5, wherein the first waveguide portion has a first thickness, and the second waveguide portion has a second thickness greater than the first thickness.

Example 7 includes the optical device of any of Examples 2-6, wherein the microlenses have respective concave shaped distal ends along the direction of propagation.

Example 8 includes the optical device of Example 7, wherein the first refractive index of the first waveguide portion is greater than the second refractive index of the second waveguide portion.

Example 9 includes the optical device of any of Examples 1-8, wherein the waveguide layer is substantially planar such that the input waveguide and the input slab are substantially planar with respect to each other.

Example 10 includes the optical device of any of Examples 1-9, wherein the waveguide layer comprises silicon nitride (Si₃N₄), silicon (Si), titanium dioxide (TiO₂), gallium arsenide (GaAs), gallium nitride (GaN), or combinations thereof.

Example 11 includes the optical device of any of Examples 1-10, wherein the substrate layer is coupled to a photonics chip.

Example 12 includes an optical device, comprising: a substrate layer having an upper surface; a first waveguide layer over the upper surface of the substrate layer, the first waveguide layer comprising: an input waveguide having a first refractive index; and an input slab adjoined with the input waveguide, the input slab having the first refractive index; a cladding layer over the first waveguide layer; and a second waveguide layer over the cladding layer, the second waveguide layer comprising: a microlens array having a second refractive index that is different from the first refractive index, the microlens array in optical communication with the input waveguide through the input slab; wherein the microlens array is configured to receive a diverging planar light beam from the input slab along a direction of propagation, the microlens array configured to control a far-field emission of the light beam such that an emission profile of the light beam exhibits a substantially uniform intensity.

Example 13 includes the optical device of Example 12, wherein the microlens array includes two or more microlenses, which are respectively angled off-axis relative to the direction of propagation.

Example 14 includes the optical device of any of Examples 12-13, wherein the first waveguide layer and the second waveguide layer are composed of different materials.

Example 15 includes the optical device of any of Examples 13-14, wherein the microlenses have respective convex shaped distal ends along the direction of propagation.

Example 16 includes the optical device of Example 15, wherein the first refractive index of the first waveguide layer is less than the second refractive index of the second waveguide layer.

Example 17 includes the optical device of any of Examples 13-14, wherein the microlenses have respective concave shaped distal ends along the direction of propagation.

Example 18 includes the optical device of Example 17, wherein the first refractive index of the first waveguide layer is greater than the second refractive index of the second waveguide layer.

Example 19 includes the optical device of any of Examples 12-18, wherein the first waveguide layer is substantially planar such that the input waveguide and the input slab are substantially planar with respect to each other.

Example 20 includes the optical device of any of Examples 12-19, wherein the substrate layer is coupled to a photonics chip.

From the foregoing, it will be appreciated that, although specific embodiments have been described herein for purposes of illustration, various modifications may be made without deviating from the scope of the disclosure. Thus, the described embodiments are to be considered in all respects only as illustrative and not restrictive. In addition, all changes that come within the meaning and range of equivalency of the claims are to be embraced within their scope.

## Claims

1. An optical device, comprising:
a substrate layer having an upper surface; and
a waveguide layer over the upper surface of the substrate layer, the waveguide layer comprising:
an input waveguide defined by a first waveguide portion having a first refractive index;
an input slab defined by the first waveguide portion, the input slab adjoined with the input waveguide; and
a microlens array defined by a second waveguide portion having a second refractive index that is different from the first refractive index, the microlens array in optical communication with the input waveguide through the input slab;
wherein the microlens array is configured to receive a diverging planar light beam from the input slab along a direction of propagation, the microlens array configured to control a far-field emission of the light beam such that an emission profile of the light beam exhibits a substantially uniform intensity.

2. The optical device of claim 1, wherein the microlens array includes two or more microlenses, which are respectively angled off-axis relative to the direction of propagation.

3. The optical device of claim 1, wherein the first waveguide portion and the second waveguide portion are composed of the same material.

4. The optical device of claim 2, wherein the microlenses have respective convex shaped distal ends along the direction of propagation.

5. The optical device of claim 4, wherein the first refractive index of the first waveguide portion is less than the second refractive index of the second waveguide portion.

6. The optical device of claim 1, wherein the first waveguide portion has a first thickness, and the second waveguide portion has a second thickness greater than the first thickness.

7. The optical device of claim 2, wherein the microlenses have respective concave shaped distal ends along the direction of propagation.

8. The optical device of claim 7, wherein the first refractive index of the first waveguide portion is greater than the second refractive index of the second waveguide portion.

9. The optical device of claim 1, wherein the waveguide layer is substantially planar such that the input waveguide and the input slab are substantially planar with respect to each other.

10. An optical device, comprising:
a substrate layer having an upper surface;
a first waveguide layer over the upper surface of the substrate layer, the first waveguide layer comprising:
an input waveguide having a first refractive index; and
an input slab adjoined with the input waveguide, the input slab having the first refractive index;
a cladding layer over the first waveguide layer; and
a second waveguide layer over the cladding layer, the second waveguide layer comprising:
a microlens array having a second refractive index that is different from the first refractive index, the microlens array in optical communication with the input waveguide through the input slab;
wherein the microlens array is configured to receive a diverging planar light beam from the input slab along a direction of propagation, the microlens array configured to control a far-field emission of the light beam such that an emission profile of the light beam exhibits a substantially uniform intensity.

## Amended claims

### Amended claims in accordance with Rule 137(2) EPC.

1. An optical device (100), comprising:
a substrate layer (102) having an upper surface (104); and
a waveguide layer (110) over the upper surface of the substrate layer, the waveguide layer comprising:
an input waveguide (112) defined by a first waveguide portion having a first refractive index;
an input slab (114) defined by the first waveguide portion, the input slab adjoined with the input waveguide; and
a microlens array (120) defined by a second waveguide portion having a second refractive index that is different from the first refractive index, the microlens array in optical communication with the input waveguide through the input slab;
wherein the microlens array is configured to receive a diverging planar light beam (130) from the input slab along a direction of propagation, the microlens array configured to control a far-field emission of the light beam such that an emission profile of the light beam exhibits a substantially uniform intensity.

2. The optical device (100) of claim 1, wherein the microlens array includes two or more microlenses, which are respectively angled off-axis relative to the direction of propagation.

3. The optical device (100) of claim 1, wherein the first waveguide portion and the second waveguide portion are composed of the same material.

4. The optical device (100) of claim 2, wherein the microlenses have respective convex shaped distal ends along the direction of propagation.

5. The optical device (100) of claim 4, wherein the first refractive index of the first waveguide portion is less than the second refractive index of the second waveguide portion.

6. The optical device (100) of claim 1, wherein the first waveguide portion has a first thickness, and the second waveguide portion has a second thickness greater than the first thickness.

7. The optical device (100) of claim 2, wherein the microlenses have respective concave shaped distal ends along the direction of propagation.

8. The optical device (100) of claim 7, wherein the first refractive index of the first waveguide portion is greater than the second refractive index of the second waveguide portion.

9. The optical device (100) of claim 1, wherein the waveguide layer is substantially planar such that the input waveguide and the input slab are substantially planar with respect to each other.

10. An optical device (200), comprising:
a substrate layer (200) having an upper surface (204);
a first waveguide layer (210) over the upper surface of the substrate layer, the first waveguide layer comprising:
an input waveguide (212) having a first refractive index; and
an input slab (214) adjoined with the input waveguide, the input slab having the first refractive index;
a cladding layer (218) over the first waveguide layer; and
a second waveguide layer (220) over the cladding layer, the second waveguide layer comprising:
a microlens array (222) having a second refractive index that is different from the first refractive index, the microlens array in optical communication with the input waveguide through the input slab;
wherein the microlens array is configured to receive a diverging planar light beam (230) from the input slab along a direction of propagation, the microlens array configured to control a far-field emission of the light beam such that an emission profile of the light beam exhibits a substantially uniform intensity.
